# EUROPÄISCHE PATENTSCHRIFT

(11) **EP 1 269 135 B1**
(45) Veröffentlichungstag und Bekanntmachung des Hinweises auf die Patenterteilung: **21.04.2010**
(21) Anmeldenummer: 02708245.2
(22) Anmeldetag: 14.02.2002
(51) Int. Cl.: G01L 9/00, G01L 19/06

(54) **DRUCKSENSORMODUL**
PRESSURE SENSOR MODULE
MODULE DE DETECTION DE PRESSION

(30) Priorität: 20.02.2001 DE 10107813
(43) Veröffentlichungstag der Anmeldung: 02.01.2003
(73) Patentinhaber: ROBERT BOSCH GMBH, 70442 Stuttgart (DE)
(72) Erfinder: SCHEURICH, Heiko, 70435 Stuttgart (DE); MAST, Martin, 70839 Gerlingen (DE); ROGGE, Berthold, 70192 Stuttgart (DE); HABIBI, Masoud, 71701 Schwieberdingen (DE)
(86) Internationale Anmeldenummer: PCT/DE2002/000519
(87) Internationale Veröffentlichungsnummer: WO 2002/066948

(56) Entgegenhaltungen:
- US-A- 5 222 397
- US-A- 6 050 146
- PATENT ABSTRACTS OF JAPAN vol. 1999, no. 09, 30. Juli 1999 (1999-07-30) & JP 11 108787 A (MATSUSHITA ELECTRIC WORKS LTD), 23. April 1999 (1999-04-23)

## Beschreibung

### Stand der Technik

Ein Drucksensormodul enthält z.B. piezoresistive Sensorzellen, die für eine breite Anwendung, wie z.B. eine Druckmessung in einem Saugrohr eines Fahrzeugs, verwendet werden. Dabei wird ein Drucksensorchip auf einen Sockel, der Glasdurchführungen für elektrische Aussenanschlüsse aufweist, gelötet. Danach werden elektrische Anschlüsse des Drucksensorchips mit Hilfe von Bonddrähten mit den elektrischen Aussenanschlüssen kontaktiert.

Der Druck eines Mediums wirkt z.B. auf eine Rückseite des Drucksensorchips durch ein Metallröhrchen, welches mit dem Sockel verlötet ist. Für Absolutdruckmessungen wird eine Metallkappe unter Vakuum auf den Sockel geschweisst.

Für Relativdruckmessungen hat die Kappe eine Öffnung.

Der Drucksensorchip wird z.B. mit Hilfe eines Gels gegen Umgebungseinflüsse geschützt. Bei Medien, die stark korrosiv sind, kann eine solche Sensorzelle nicht verwendet werden, da das korrosive Medium den Drucksensorchip oder das Gel angreift.

Aus der JP 2000 046 666 A1 ist ein Drucksensormodul bekannt, bei dem die Sensormembran durch ein Gel im Druckstutzen geschützt ist. Dieses Gel wird jedoch auch von dem korrosiven Medium angegriffen und wird sich, da es keine grosse chemische Beständigkeit bzw. mechanische Festigkeit als Gel aufweist, in seiner Form mit der Zeit verändern, was ein Messergebnis beeinflusst.

Hierzu wird nach dem Stand der Technik der Druck indirekt mit Hilfe einer Trennmembran und eines Druckübertragungsmediums, z.B. Silikonöl, auf den Drucksensorchip übertragen. Der Aufbau eines solchen Drucksensormoduls mit dieser Ölvorlage ist z.B. aus dem AMA-Seminarband, 1989, Seite 285 bis 295 bekannt. Bei diesem Aufbau ist das Ölvolumen um den Drucksensorchip relativ gross. Infolge eines hohen thermischen Volumenausdehnungskoeffizienten des Silikonöls im Vergleich zum Volumenausdehnungskoeffizienten eines Gehäusewerkstoffs wird bei einer Temperaturänderung die Trennmembran ausgelenkt. Infolge einer nicht vernachlässigbaren Steifigkeit der Trennmembran baut sich nun ein Druck in dem Drucksensormodul am Drucksensorchip auf, der nur durch die Temperaturänderung erfolgt ist und welcher das Messsignal verfälscht.

Um das Ölvolumen beim bekannten Drucksensormodul zu reduzieren, wird das Ölvolumen um den Drucksensorchip, z.B. mit Hilfe eines Füllkörpers aus Keramik, reduziert. Der Füllkörper benötigt hierbei einen separaten Montageschritt. Bei dem bekannten Drucksensormodul gibt es infolge von relativ grossen Herstellungstoleranzen für den Hohlraum um den Drucksensorchip im Vergleich zum Hohlraum unter der Trennmembran ein grosses Ölvolumen.

Damit ist für höhere Messgenauigkeiten eine Kalibrierung des Drucksensorchips im ölgefüllten Zustand erforderlich.

Hierbei ist die benötigte Zeit zum Einfahren der Temperaturschritte beim Kalibrieren länger, da eine höhere Wärmekapazität vorhanden ist. Ausserdem kann ein Defekt des Drucksensorchips beim bekannten Drucksensormodul erst im fertigen Zustand festgestellt werden. Dadurch sind die Kosten durch Ausschuss höher, da das komplette Teil zum Ausschuss gelangt.

Aus der DE 195 07 143 A1 bzw. US-PS 5,595,939 ist ein Drucksensormodul nach dem Prinzip der Ölvorlage mit einfacheren Montageverfahren bekannt. Bei diesem Drucksensormodul wird der Füllkörper zur Reduzierung des Ölvolumens durch eine Ausnehmung für den Drucksensorchip im Steckergehäuse aus Kunststoff ersetzt. Hierbei wird eine Abdichtung der Trennmembran zum Stecker mit Hilfe eines O-Rings oder einer Quetschdichtung bewerkstelligt. Bei dieser Art der Abdichtung besteht die Gefahr, dass z.B. im Falle eines beschädigten O-Rings oder bei haftenden Partikeln auf der Dichtfläche das Ö1 aus dem Sensorinnenraum austritt. Bei dem Drucksensormodul wird die eingeschlossene Restluft im Sensor beim Ölbefüllen durch Anlegen eines hohen Drucks an die Trennmembran aus dem für die Luftmoleküle durchlässigen Kunststoffmaterial der Sensorzelle hinausgetrieben. Hierbei besteht die Gefahr, dass der Drucksensorchip, welcher für kleine Druckmessbereiche ausgelegt ist, durch den hohen Druck zum Verdrängen der Restluft im Gehäuse beschädigt wird.

Für den Drucksensorchip sind ferner Massnahmen zur Verbesserung der elektromagnetischen Verträglichkeit, mit Hilfe von z.B. Kondensatoren, notwendig. Die Integration dieser Kondensatoren im Gehäuse beim bekannten Drucksensormodul ist aufwendig und erhöht die Herstellungskosten für das Drucksensormodul.

Aus der JP 2000 009 568 A1 ist ein Drucksensormodul bekannt, bei dem ein Adapter an eine Drucksensorzelle angeschlossen wird, um den Druck einer Flüssigkeit zu bestimmen. Der Aufbau ist sehr aufwendig und beinhaltet ein grosses Totvolumen des übertragenden Mediums.

Aus der JP 11 316 166 A1 und der DE 44 15 984 A1 bzw. US-PS 5, 629, 538 sind Drueksensorchips bekannt, die einen Schutzfilm auf der Sensormembran aufweisen, um diese so vor einer korrosiven Umgebung zu schützen. Diese Schutzschicht verändert das Ansprechverhalten und Messverhalten der Membran in negativer Weise und bietet auch keinen hinreichenden Schutz über eine längere Zeit, da diese Schutzschicht hinreichend dünn ausgeführt sein muss, damit sich die Sensormembran weiterhin gut verbiegen kann.

Aus der JP 81 36 380 A1 ist ein Druckscnsormodul bekannt, das an einen Adapter angeschlossen ist, um den Drucksensorchip vor dem korrosiven Medium zu schützen. Bei diesem Aufbau muss wiederum ein O-Ring zur Abdichtung verwendet werden, was die bereits oben beschriebenen Probleme mit O-Ringen verursacht.

Aus der US 5 222 397 ist ein Drucksensormodul bekannt, das aus einem Drucksensorchip zur Bestimmung eines Druck besteht, der mit einem Druckstutzen verbunden ist, der den Druck an den Drucksensorchip weiterleitet, wobei mit dem Druckstutzen ein Adapter mit Trennmembran verbunden ist, der den Druck aufnimmt und über den Druckstutzen an den Drucksensorchip weiterleitet, und der den Drucksensorchip vor Medien schützt, die den Drucksensorchip beschädigen können. Der Adapter ist mit einen Schraubgewinde versehen, um ihn in einer Einbauöffnung fest einzuschrauben.

Aus der US 5 665 921 ist ein Drucksensorelement mit Diaphragma bekannt. Das mit elektrischen Elementen beschichtete Diaphragma dient zur Druckerfassung. Das Drucksensorelement ist über elastische Elemente an dem Adapter festgelegt, so dass sich das Drucksensorelement relativ zum Adapter bewegen kann.

Aus der GB 2 264 361 A ist ein Druckschalter bekannt. Eine Druckmesszelle mit Sensormembran und darauf angeordneten Druckmesselementen und Kontaktelementen ist federbeaufschlagt und beweglich in einem Gehäuse angeordnet Im Falle einer Druckbeaufschlagung bewegt sich die Druckmesszelle gegen die Spannkraft einher Feder, bis die Kontaktelemente auf der Sensormembran einer Stützring kontaktieren. Erst nach Herstellung dieses elektrischen Kontakts kann der Druck erfasst werden.

Aus der US 5 625 151 ist weiterhin ein Drucksensormodul mit einem Drucksensorchip und einem Gehäuse mit Trennmembran und einem mit einer Flüssigkeit gefüllten Durchgangsloch bekannt.

### Vorteile der Erfindung

Das erfindungsgemässe Drucksensormodul, das in Anspruch 1 beansprucht ist, umfasst einen Adapter, der ein durchgehendes Loch aufweist, das auf der einen Seite an einen Druckstutzen der Sensorzelle angeschlossen ist und auf der anderen Seite durch eine Trennmembran verschlossen ist. Der Adapter nimmt den Druck auf und leitet ihn über den Druckstutzen an den Drucksensorchip des Drucksensormoduls weiter und schützt den Drucksensorchip vor Medien, die den Drucksensorchip beschädigen können. Das in dem Adapter eingeschlossene Volumen kann auf vorteilhafte Weise mit einer Flüssigkeit gefüllt sein, wobei es weiterhin vorteilhaft ist, wenn der Adapter eine zusätzlich Öffnung hat, durch die die Flüssigkeit in das Loch eingefüllt werden kann. Der Adapter hat einen einfachen Aufbau und ist deshalb kostengünstig.

Eine Beschädigung der Trennmembran bei einem Gefrieren des mit der Trennmembran des Adapters in Berührung stehenden Mediums wird vorteilhaft dadurch vermieden, dass das Drucksensormodul in einer Einstecköffnung einer an das mit der Trennmembran in Berührung stehende Medium angrenzenden Wand derart einführbar ist, dass das Drucksensormodul, wenn das Medium gefriert und sich ausdehnt, teilweise aus der Einstecköffnung heraus verschiebbar ist.

Eine Leiterplatte mit bspw. vorhandenen Bauelementen darauf kann auf vorteilhafte Weise an äußere elektrische AnsChlüsse des Drucksensorchips der Sensorzelle angeschlossen sein. So können ferner Bauelemente zur Verbesserung der elektromagnetischen Verträglichkeit vorteilhafterweise auf der Leiterplatte montiert sein.

Das Drucksensormodulgehäuse kann auf vorteilhafte Weise die elektrischen Steckeranschlüsse beinhalten.

Das erfindungsgemäße Drucksensormodul kann darüber hinaus auf einfache Art und Weise kostengünstig und mit hoher Messgenauigkeit für den Einsatz in korrossiver Umgebung hergestellt werden. Die hohe Genauigkeit wird durch starke Reduzierung des Ölvolumens erzielt. Dadurch ist beim erfindungsgemässen Drucksensormodul der Einfluss der thermischen Ausdehnung des Ölvolumens auf das Messsignal sehr gering. Daher kann eine schnelle Kalibrierung des Drucksensorchips, der in der Sensorzelle eingebaut ist, durchgeführt werden, um die aufwendigen und langen Temperaturschritte beim kompletten Drucksensormodul zu vermeiden. Durch einen Abgleich der Sensorzellen sind die Ausschusskosten beim Kalibrieren des Drucksensormoduls geringer. Da die Sensorzelle kleiner ist als das Drucksensormodul, können gleichzeitig mehrere Sensorzellen kalibriert werden,

### Zeichnung

Ausführungsbeispiele der Erfindung sind in der Zeichnung vereinfacht dargestellt und in der nachfolgenden Beschreibung näher erläutert.

### Es zeigen

Figur 1 eine Sensorzelle mit einem Drucksensorchip im axialen Querschnitt nach dem Stand der Technik,
Figur 2 ein Drucksensormodul im Querschnitt nach dem Stand der Technik,
Figur 3 einen Adapter im axialen Querschnitt,
Figur 4a eine Sensorzelle mit einer Leiterplatte und elektrischen Anschlüssen und einen Adapter im unmontierten Zustand, Figur 4b zeigt die Teile der Figur 4a im montierten Zustand,
Figur 5a ein Ausführungsbeispiel eines erfindungsgemäss ausgebildeten Drucksensormoduls im unmontierten Zustand,
Figur 5b ein Ausführungsbeispiel eines erfindungsgemäss ausgebildeten Drucksensormoduls gemäss Figur 5a im axialen Querschnitt, Figur 5c ein weiteres Ausführungsbeispiel eines erfindungsgemäss ausgebildeten Drucksensormoduls ohne Leiterplatte, und
Figur 6 ein weiteres erfindungsgemäss ausgebildetes Drucksensormodul im axialen Querschnitt.

### Beschreibung der Ausführungsbeispiele

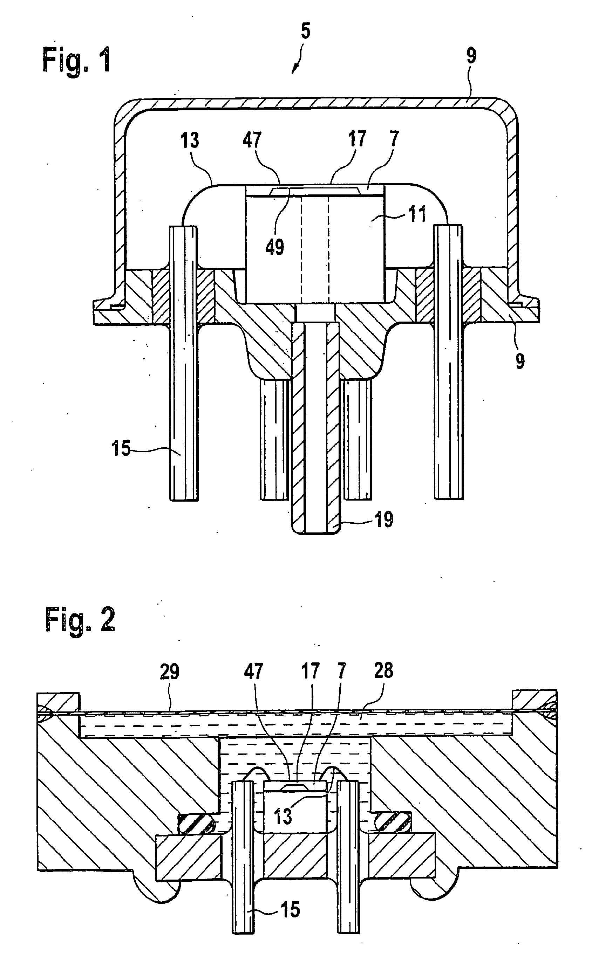

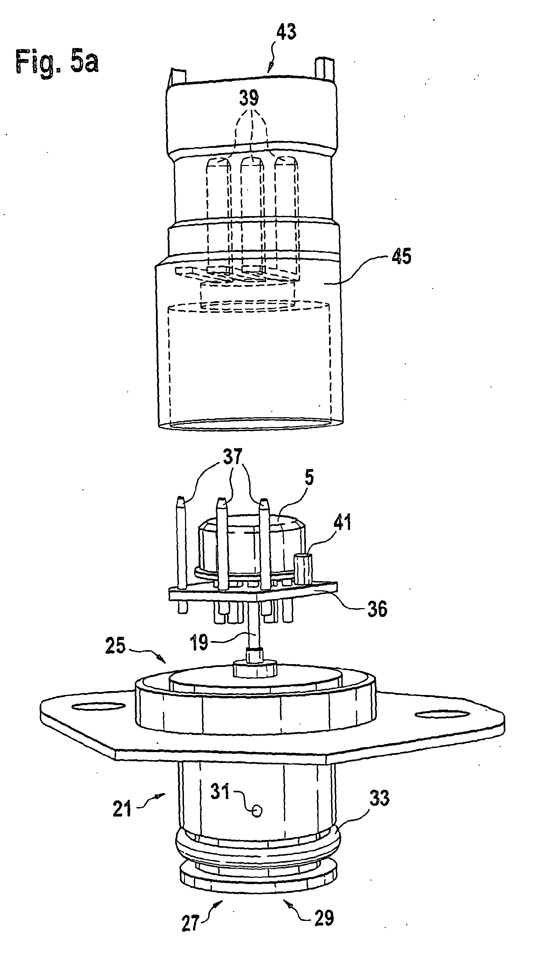

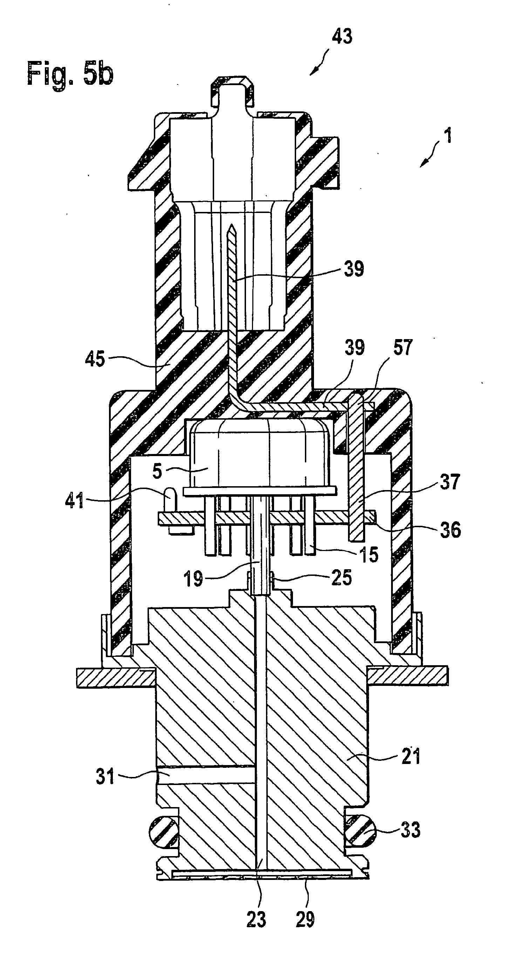

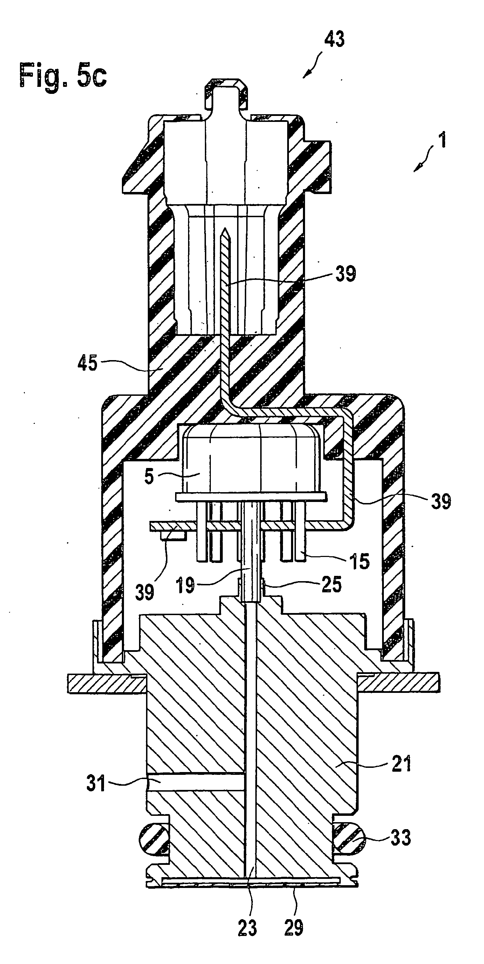

Figur 1 zeigt eine Sensorzelle 5 im axialen Querschnitt, die einen Drucksensorchip 7 enthält, die beispielsweise im erfindungsgemässen Drucksensormodul 1 (Figur 5) verwendet wird. Der Drucksensorchip 7 ist bspw. mittels anodischem Bonden auf einem Glasträger 11 montiert. Die Sensorzelle 5 hat ein bspw. zweiteiliges Sensorgehäuse 9, in dem der Glasträger 11 bspw. durch ein Lötverfahren befestigt ist. Der Drucksensorchip 7 ist innerhalb des Sensorgehäuses 9 durch Bonddrähte 13 mit elektrischen Sensoranschlusselementen 15 elektrisch verbunden, die durch das Sensorgehäuse 9 hindurchragen. Der Drucksensorchip 7 weist bspw. eine Membran 17 auf, die auf einer Unterseite 49 von einem Medium beaufschlagt wird, das über einen Druckstutzen 19, bspw. ein zusätzliches Metallröhrchen, zugeleitet wird, wie es gestrichelt angedeutet ist. Die Membran 17 kann sich aufgrund eines an ihr wirkenden Drucks des Mediums verbiegen, so dass es durch die Verbiegung zu einem Messsignal kommt, das über die Bonddrähte 13 weitergeleitet wird. Für die Sensorzelle 5 kann auch ein anderer Drucksensorchip 7 verwendet werden.

Innerhalb des Sensorgehäuses 9 herrscht bspw. ein Vakuum, so dass die Sensorzelle 5 zur Absolutdruckmessung verwendet werden kann.

Die Membran 17 hat eine Oberseite 47, die mit einer Oberseite des Drucksensorchips 7 in etwa einer Ebene liegt. Auf dieser Oberseite 47 des Drucksensorchips 7 sind die Bonddrähte 13 befestigt. Die Membran 17 hat weiterhin die Unterseite 49, die der Membranoberseite gegenüberliegt.

Figur 2 zeigt ein Drucksensormodul nach dem Stand der Technik.

Bei einem solchen Drucksensormodul ist eine Flüssigkeit 28 als ein druckübertragendes Medium auf der Membranoberseite 47 des Drucksensorchips 7 angeordnet, auf der auch die elektrische Kontaktierung mit den Bonddrähten 13 vorhanden ist. Die Flüssigkeit 28 wird durch eine Trennmembran 29 abgeschlossen, so dass der Drucksensorchip 7 auch hier vor korrosiven Medien geschützt ist. Das Volumen für das druckübertragende Medium 28 ist jedoch relativ gross, weil es die gesamte Oberfläche des Drucksensorchips 7 und der Sensoranschlusselemente 15 umfasst. Weiterhin muss ein gewisser Abstand von der Trennmembran 29 zum Drucksensorchip 7 vorhanden sein, damit die Trennmembran 29 nicht die Bonddrähte 13 oder den Drucksensorchip 7 berühren kann. Insbesondere dieses grosse Volumen des druckübertragenden Mediums 28 führt zu den oben genannten Schwierigkeiten.

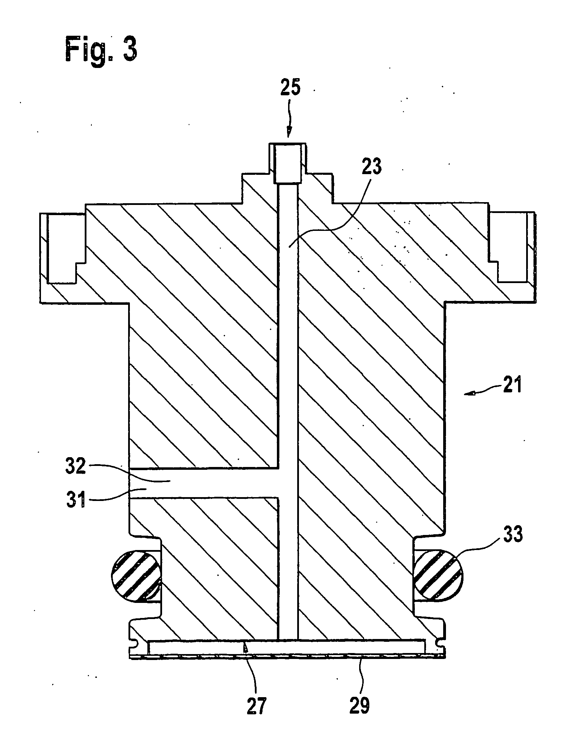

Figur 3 zeigt einen Adapter 21 im axialen Querschnitt, der beispielsweise zylinderförmig ausgebildet ist, und in dessen Mitte ein durchgehendes Loch 23 vorhanden ist. Der Adapter 21 wird auf einer Sensorseite 25 an den Druckstutzen 19 der Sensorzelle 5 angeschlossen (Fig. 5). Auf der gegenüberliegenden Seite, einer Mediumseite 27, ist das Loch 23 durch eine Trennmembran 29 verschlossen. Zwischen Trennmembran 29 und der Mediumseite 27 ist ein geringer Abstand vorhanden.

Der Adapter 21 hat quer zum Loch 23 eine Füllöffnung 31 und ein Füllloch 32, durch die eine Flüssigkeit in das Loch 23 im montierten Zustand des Adapters 21 mit der Sensorzelle 5 eingeführt werden kann. Das Volumen des Lochs 23 und des Fülllochs 32 ist bewusst klein gewählt, um einen Einfluss der Flüssigkeit auf das Messverhalten des Drucksensorchips 7 klein zu halten. Die Flüssigkeit, die in das Loch 23 und das Füllloch 32 eingefüllt wird, dient zur Übertragung eines Druckes, der an der Trennmembran 29 anliegt, auf die Membran 17. Vorzugsweise wird für diese Flüssigkeit ein Silikonöl verwendet. Das Füllloch 32 wird nach dem Ölbefüllen, z.B. durch das Einpressen einer Metallkugel, dicht verschlossen. Der Adapter 21 hat an seiner Aussenfläche einen Dichtring 33, der den Adapter 21 gegenüber einer Öffnung oder einem Behälter, in dem sich das zu messende Medium befindet, abdichtet.

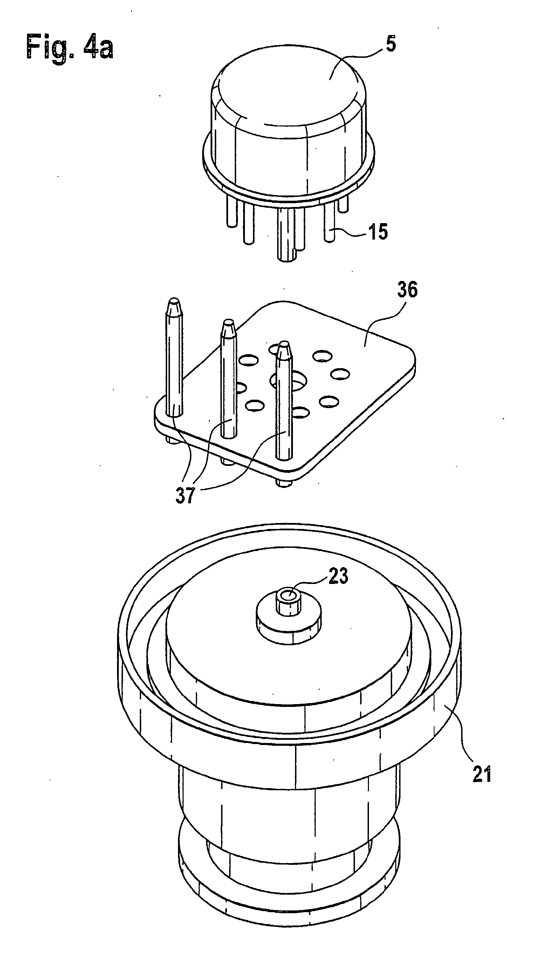

Figur 4a zeigt, in welcher Abfolge die Sensorzelle 5 mit dem Adapter 21 und einer Leiterplatte 36 zusammengebaut wird. Zwischen der Sensorzelle 5 und dem Adapter 21 wird bspw. die Leiterplatte 36 angeordnet, die bspw. mit zumindest einem Kontaktstift 37 elektrisch verbunden ist, der wiederum beispielsweise mit Steckeranschlüssen 39 elektrisch verbunden wird (Fig. 5).

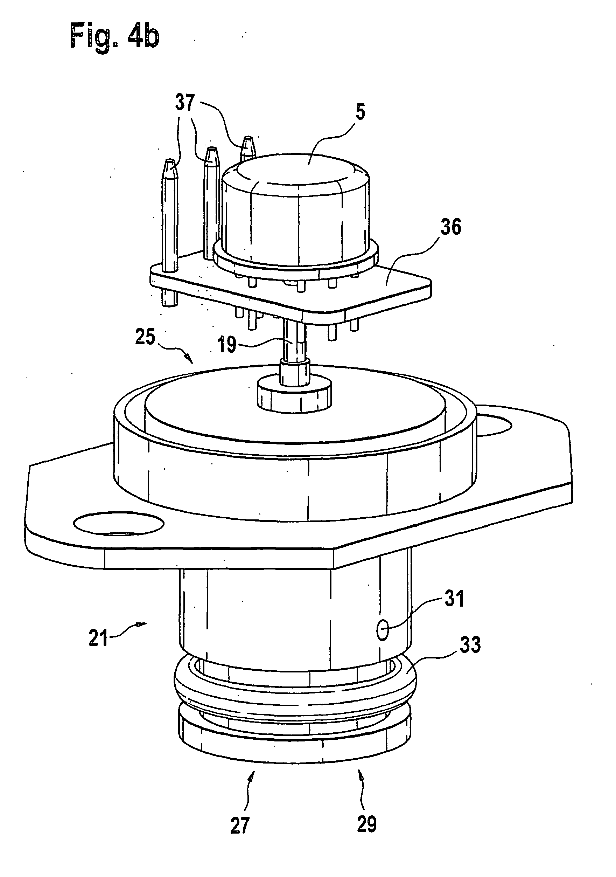

Figur 4b zeigt die Teile der Figur 4a im zusammengebauten Zustand. Der Druckstutzen 19 ist mit dem Loch 23 auf der Sensorseite 25 des Adapters 21 dicht verbunden. Der Adapter 21 schützt die Membran 17 vor einem korrosiven Medium. Die Leiterplatte 36 ist mit den Sensoranschlusselementen 15 der Sensorzelle 5 elektrisch leitend verbunden und bspw. über Leitungen auf der Leiterplatte 36 mit den Kontaktstiften 37 oder bspw. direkt (Fig. 5c) mit Steckeranschlüssen 39 elektrisch verbunden, so dass über einen äusseren Stecker 43 (Fig. 5a, b, c) eine elektrische Verbindung von der Sensorzelle 5 nach aussen geschaffen ist. Die Leiterplatte 36 ist kein notwendiges Bauteil des erfindungsgemässen Drucksensormoduls 1. Anstelle der Leiterplatte 36 kann beispielsweise auch ein Stanzgitter Verwendung finden. Figur 5a zeigt ein erfindungsgemässes Drucksensormodul 1, weiterhin im teilmontierten Zustand. Auf die Anordnung gemäss Figur 4b wird nun ein Drucksensormodulgehäuse 45 montiert und mit diesem mechanisch bspw. am Adapter 21 verbunden. Die Sensorzelle 5 ist durch das Drucksensormodulgehäuse 45, bspw. durch Kleber zwischen Sensorzelle 5 und Gehäuse 45, gehalten.

Die Steckeranschlüsse 39 sind bspw. in dem Gehäuse 45 eingespritzt und bspw. gehalten. Weiterhin bildet ein Teil des Gehäuses 45 mit den Steckeranschlüssen 39 einen Stecker 43, in dem die Steckeranschlüsse 39 von aussen zugänglich sind.

Auf der Leiterplatte 36 ist bspw. zumindest ein elektrisches Bauelement 41 angeordnet, das beispielsweise zur Verbesserung der elektromagnetischen Verträglichkeit dient. Dies sind z.B. Kondensatoren.

Figur 5b zeigt ein erfindungsgemäss montiertes Drucksensormodul 1 im axialen Querschnitt.

Die Kontaktstifte 37 sind an einer Kontaktstelle 57 mit den Steckeranschlusselementen 39 elektrisch leitend, bspw. durch Löten, verbunden. Die Kontaktstelle 57 kann noch durch ein Gel oder Kleber vor äusserer Korrosion geschützt werden.

Die an ihrem Rand umlaufend eingespannte Trennmembran 29 verbiegt sich, wenn an ihr ein äusserer Druck anliegt.

Figur 5c zeigt ein weiteres Ausführungsbeispiel eines erfindungsgemässen Drucksensormoduls 1 ohne Leiterplatte 36. Dabei sind die Steckeranschlüsse 39 bspw. direkt mit den Sensoranschlusselementen 15 elektrisch kontaktiert worden. Das Gehäuse 45 kann bspw. um die Sensorzelle 5 und die Steckeranschlüsse 39 gespritzt oder gegossen werden.

Der Vorteil des erfindungsgemässen Drucksensormoduls 1 besteht darin, dass eine handelsübliche Sensorzelle 5 verwendet werden kann, um einen Druck eines korrosiven Mediums zu messen.

Die Trennmembran 29 ist federnd ausgeführt und gibt einen Druck über die Flüssigkeit, die sich in dem Volumen zwischen Trennmembran 29 und Membran 17 befindet, an den Drucksensorchip 7 weiter. Die Trennmembran 29 ist aus einem korrosivbeständigen Material.

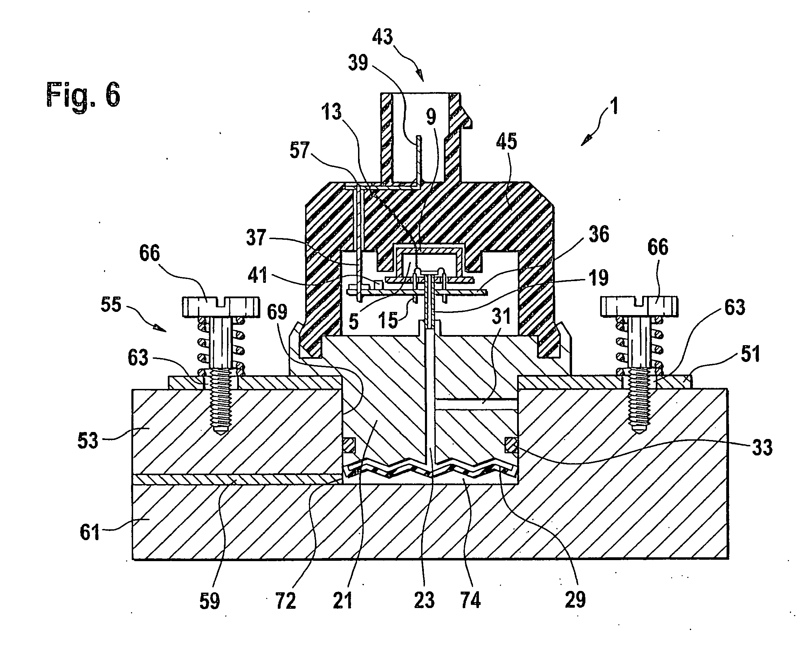

Figur 6 zeigt ein weiteres erfindungsgemässes Drucksensormodul 1 im axialen Querschnitt, das bspw. einen Befestigungsflansch 51 aufweist, mittels dem es bspw. an einer Wand 53 befestigt ist. Das Drucksensormodul 1 ist in eine Einstecköffnung 69 der Wand 53 eingeführt. Die Wand 53 ist Teil einer Leitung 61, in der ein bspw. korrosives Medium 59 strömt, oder eines Reservoirs 61, in dem ein korrosives Medium 59 gespeichert ist.

Das Medium 59 kann gefrieren und da es direkt an der Trennmembran 29 anliegt, kann durch das Ausdehnen des gefrierenden Mediums 59 der Druck über die Trennmembran 29 auf die Membran 17 so gross werden, dass diese 17 bricht. Hierbei ist es sinnvoll, das Volumen des Mediums 59 im Bereich der Trennmembran 29 möglichst gering zu halten, um die Volumenzunahme des gefrierenden Mediums 59 ebenfalls gering zu halten. Um einen Membranbruch zu vermeiden, ist eine homogene Vereisung von Vorteil. Diese wird bspw. durch eine seitliche Druckzufuhr (72) und einem gleichmäßigen Abstand zwischen Membran 29 und dem gegenüberliegenden Grundlochboden (74) erreicht.

Ausserdem ist, zur Vermeidung des Membranbruchs, das Drucksensormodul 1 federnd an der Wand 53 befestigt. Dies wird bspw. dadurch erreicht, dass der Befestigungsflansch 51 federnd ausgeführt ist. Dabei ist bspw. der Befestigungsflansch 51 aus einem elastischem Material, bspw. einem Federblech, und er 51 ist an zumindest zwei Befestigungspunkten 63 fixiert, zwischen denen sich der Befestigungsflansch 51 verbiegen kann.

Eine weitere Möglichkeit ist in Figur 6 gezeigt. Mittels einer Feder 55 und einem T-Stück 66, bspw. einer Schraube 66, ist das Drucksensormodul 1 federnd an der Wand 53 befestigt. Die Schraube 66 ist durch eine Öffnung des Befestigungsflanschs 51 hindurchgeführt und in die Wand 53 eingeschraubt. Die Feder 55 ist zwischen dem starren Befestigungsflansch 51 und der Schraube 66 angeordnet. Dabei greift die Feder 55 so an der Schraube 66 und an dem Befestigungsflansch 51 an, dass das Drucksensormodul 1 unter Aufbringung einer Kraft zum Zusammendrücken der Feder 55 aus der Einstecköffnung 69 herausgedrückt werden kann.

Dabei ist die Federkraft der Feder 55 so eingestellt, dass die Feder 55 erst beim Ausdehnen des gefrierenden Mediums 59 nachgibt. Dasselbe gilt für einen federnd ausgeführten Befestigungsflansch 51.

Der Dichtring 33 liegt in axialer Richtung knapp über der Trennmembran 29, um eine Reibung des gefrorenen Mediums zwischen dem Adapter 21 und einer Innenwandung in der Wand 53 zu reduzieren.

Das Medium muss für die Funktionsweise des Drucksensormoduls 1 nicht notwendigerweise korrosiv sein.

## Patentansprüche

1. Drucksensormodul (1), das in eine Einstecköffnung (69) einer an ein Medium (59) angrenzenden Wand (53) einführbar ist, wobei
das Drucksensormodul (1) zumindest aufweist:
- einen Drucksensorchip zur Bestimmung eines Drucks,
- einen mit dem Drucksensorchip verbunden Druckstutzen (19), der den Druck an den Drucksensorchip weiterleitet,
- und einen Adapter (21), der ein durchgehendes Loch (23) aufweist, das auf einer Sensorseite (25) mit dem Druckstutzen (19) verbunden ist und das auf einer dem Medium zugewandten Mediumseite (27) durch eine Trennmembran (29) verschlossen ist, welcher Adapter den Druck aufnimmt und über den Druckstutzen (19) an den Drucksensorchip (7) weiterleitet und den Drucksensorchip (7) vor Medien (59) schützt, die den Drucksensorchip (7) beschädigen können,
wobei das Drucksensormodul derart in die Einstecköffnung (69) einführbar ist, dass das Medium (59) auf der von dem Adapter abgewandten Seite mit der Trennmembran (29) in Berührung steht, und das Drucksensormodul (1), wenn das Medium (59) gefriert und sich ausdehnt, teilweise aus der Einstecköffnung (69) heraus verschiebbar ist.

2. Drucksensormodul nach Anspruch 1,
**dadurch gekennzeichnet, dass**
der Druckstutzen (19) und das Loch (23) sowie ein Füllloch (32) des Adapters (21) mit einer Flüssigkeit gefüllt sind.

3. Drucksensormodul nach Anspruch 1,
**dadurch gekennzeichnet,**
**dass** der Drucksensorchip (7) eine Oberseite (47) hat, auf der Bonddrähte (13) elektrisch angeschlossen sind, und
**dass** eine Unterseite (49) des Drucksensorchips (7) mit dem Druckstutzen (19) verbunden ist.

4. Drucksensormodul nach Anspruch 1,
**dadurch gekennzeichnet,**
**dass** der Drucksensorchip (7) in einer Sensorzelle (5) angeordnet ist, die äußere elektrische Sensoranschlusselemente (15) hat, und
**dass** an die Sensoranschlusselemente (15) eine Leiterplatte (36) des Drucksensormoduls elektrisch angeschlossen ist.

5. Drucksensormodul nach Anspruch 4,
**dadurch gekennzeichnet,**
**dass** die Leiterplatte (36) mit elektrischen Steckeranschlüssen (39) des Drucksensormoduls elektrisch verbunden ist, und
**dass** das Drucksensormodul (1) ein Drucksensormodulgehäuse (45) hat, und
**dass** die elektrischen Steckeranschlüsse (39) mit dem Drucksensormodulgehäuse (45) einen Stecker (43) bilden.

6. Drucksensormodul nach Anspruch 1,
**dadurch gekennzeichnet,**
**dass** der Drucksensorchip (7) mit elektrischen Steckeranschlüssen (39) des Drucksensormoduls verbunden ist, und
**dass** das Drucksensormodul (1) ein Drucksensormodulgehäuse (45) hat, und
**dass** die elektrischen Steckeranschlüsse (39) mit dem Drucksensormodulgehäuse (45) einen Stecker (43) bilden.

7. Drucksensormodul nach Anspruch 1,
**dadurch gekennzeichnet, dass**
der Drucksensorchip (7) in einer vorgefertigten Sensorzelle (5) angeordnet ist, die äußere elektrische Sensoranschlusselemente (15) hat.

8. Drucksensormodul nach Anspruch 5 oder 6,
**dadurch gekennzeichnet,**
**dass** das Drucksensormoduigchäuse (45) mit dem Adapter (21) verbunden ist.

9. Drucksensormodul nach Anspruch 1,
**dadurch gekennzeichnet, dass** das Drucksensormodul weiterhin einen Befestigungsflansch (51) aufweist, an dem das Drucksensormodul (1) angeordnet ist, welcher Befestigungsflansch federnd ausgeführt ist, so dass der Befestigungsflansch (51) bei in die Einstecköffnung (69) eingeführtem Drucksensormodul gegenüber der Wand (53) zumindest teilweise verschiebbar ist und das Drucksensormodul (1) teilweise aus der Einstecköffnung (69) heraus verschiebbar ist.

10. Drucksensormodul nach Anspruch 1,
**dadurch gekennzeichnet, dass** das Drucksensormodul weiterhin einen Befestigungsflansch (51) aufweist, an dem das Drucksensormodul (1) angeordnet ist, welcher Befestigungsflansch an eine Feder (55) so angreift, dass der Befestigungsflansch (51) bei in die Einstecköffnung (69) eingeführtem Drucksensormodul gegenüber der Wand (53) verschiebbar ist, wenn eine bestimmte Kraft auf die Feder (55) wirkt, so dass das Drucksensormodul (1) teilweise aus der Einstecköffnung (69) heraus verschiebbar ist

## Claims

1. Pressure sensor module (1), which can be inserted into an insertion opening (69) of a wall (53) adjacent to a medium (59),
the pressure sensor module (1) having at least:
- a pressure sensor chip for determining a pressure,
- a pressure connection piece (19), which is connected to the pressure sensor chip and passes on the pressure to the pressure sensor chip,
- and an adapter (21), which has a through-hole (23), which on a sensor side (25) is connected to the pressure connection piece (19) and on a medium side (27), facing the medium, is closed by a separating membrane (29), which adapter picks up the pressure and passes it on to the pressure sensor chip (7) via the pressure connection piece (19) and protects the pressure sensor chip (7) from media (59) that may damage the pressure sensor chip (7),
wherein the pressure sensor module can be inserted into the insertion opening (69) in such a way that the medium (59) on the side facing away from the adapter is in contact with the separating membrane (29), and the pressure sensor module (1) can be partially displaced out of the insertion opening (69) when the medium (59) freezes and expands.

2. Pressure sensor module according to Claim 1, **characterized in that** the pressure connection piece (19) and the hole (23) as well as a filling hole (32) of the adapter (21) are filled with a liquid.

3. Pressure sensor module according to Claim 1, **characterized in that** the pressure sensor chip (7) has an upper side (47), on which bonding wires (13) are electrically connected, and **in that** an underside (49) of the pressure sensor chip (7) is connected to the pressure connection piece (19).

4. Pressure sensor module according to Claim 1, **characterized in that** the pressure sensor chip (7) is arranged in a sensor cell (5), which has outer electrical sensor connection elements (15), and **in that** a printed circuit board (36) of the pressure sensor module is electrically connected to the sensor connection elements (15).

5. Pressure sensor module according to Claim 4, **characterized in that** the printed circuit board (36) is electrically connected to electrical connector connections (39) of the pressure sensor module, and **in that** the pressure sensor module (1) has a pressure sensor module housing (45), and **in that** the electrical connector connections (39) together with the pressure sensor module housing (45) form a connector (43).

6. Pressure sensor module according to Claim 1, **characterized in that** the pressure sensor chip (7) is connected to electrical connector connections (39) of the pressure sensor module, and **in that** the pressure sensor module (1) has a pressure sensor module housing (45), and **in that** the electrical connector connections (39) together with the pressure sensor module housing (49) form a connector (43).

7. Pressure sensor module according to Claim 1, **characterized in that** the pressure sensor chip (7) is arranged in a prefabricated sensor cell (5), which has outer electrical sensor connection elements (15).

8. Pressure sensor module according to Claim 5 or 6, **characterized in that** the pressure sensor module housing (45) is connected to the adapter (21).

9. Pressure sensor module according to Claim 1, **characterized in that** the pressure sensor module also has a fastening flange (51), on which the pressure sensor module (1) is arranged, which fastening flange is of a resilient configuration, so that, when the pressure sensor module is inserted in the insertion opening (69), the fastening flange (51) is at least partially displaceable with respect to the wall (53) and the pressure sensor module (1) can be partially displaced out of the insertion opening (69).

10. Pressure sensor module according to Claim 1, **characterized in that** the pressure sensor module also has a fastening flange (51), on which the pressure sensor module (1) is arranged, which fastening flange acts on a spring (55) in such a way that, when the pressure sensor module is inserted in the insertion opening (69), the fastening flange (51) is displaceable with respect to the wall (53) when a specific force acts on the spring (55), so that the pressure sensor module (1) can be partially displaced out of the insertion opening (69).

## Revendications

1. Module (1) de sonde de pression qui peut être inséré dans une ouverture d'enfichage (69) d'une paroi (53) adjacente à un fluide (59), le module (1) de sonde de pression présentant au moins :
- une puce de sonde de pression qui détermine une pression,
- une tubulure de pression (19) qui est reliée à la puce de sonde de pression et qui transmet la pression à la puce de sonde de pression et
- un adaptateur (21) traversé par un trou (23) relié sur le côté sonde (25) à la tubulure de pression (19) et fermé par une membrane de séparation (29) sur le côté fluide (27) tourné vers le fluide, l'adaptateur enregistrant la pression et la transmettant à la puce (7) de sonde de pression par l'intermédiaire de la tubulure de pression (19) et protégeant la puce (7) de sonde de pression de fluides (59) qui pourraient endommager la puce (7) de sonde de pression,
le module de sonde de pression pouvant être inséré dans l'ouverture d'insertion (69) de telle sorte que le fluide (59) soit en contact avec le côté de la membrane de séparation (29) non tourné vers l'adaptateur,
le module (1) de sonde de pression pouvant être partiellement extrait de l'ouverture d'insertion (69) si le fluide (59) gèle et se dilate.

2. Module de sonde de pression selon la revendication 1, **caractérisé en ce que** la tubulure de pression (19) et le trou (23) ainsi qu'un trou de remplissage (32) de l'adaptateur (21) sont remplis d'un liquide.

3. Module de sonde de pression selon la revendication 1, **caractérisé en ce que** la puce (7) de sonde de pression présente un côté supérieur (47) sur lequel des fils de liaison (13) sont raccordés électriquement et **en ce qu'**un côté inférieur (49) de la puce (7) de sonde de pression est relié à la tubulure de pression (19).

4. Module de sonde de pression selon la revendication 1, **caractérisé en ce que** la puce (7) de sonde de pression est disposée dans une cellule de sonde (5) qui possède des éléments extérieurs (15) de raccordement électrique à la sonde et **en ce qu'**une carte de circuit (36) du module de sonde de pression est raccordée électriquement aux éléments (15) de raccordement à la sonde.

5. Module de sonde de pression selon la revendication 4, **caractérisé en ce que** la carte de circuit (36) est reliée électriquement à des fiches (39) de raccordement électrique du module de sonde de pression, **en ce que** le module (1) de sonde de pression possède un boîtier (45) de module de sonde de pression et **en ce que** les fiches (39) de raccordement électrique forment une fiche (43) avec le boîtier (45) du module de sonde de pression.

6. Module de sonde de pression selon la revendication 1, **caractérisé en ce que** la puce (7) de sonde de pression est reliée à des fiches (39) de raccordement électrique du module de sonde de pression, **en ce que** le module (1) de sonde de pression possède un boîtier (45) de module de sonde de pression et **en ce que** les fiches (39) de raccordement électrique forment une fiche (43) avec le boîtier (45) de module de sonde de pression.

7. Module de sonde de pression selon la revendication 1, **caractérisé en ce que** la puce (7) de sonde de pression est disposée dans une cellule préfabriquée (5) de sonde qui possède des éléments extérieurs (15) de raccordement électrique de la sonde.

8. Module de sonde de pression selon les revendications 5 ou 6, **caractérisé en ce que** le boîtier (45) de module de sonde de pression est relié à l'adaptateur (21).

9. Module de sonde de pression selon la revendication 1, **caractérisé en ce que** le module de sonde de pression présente en outre une bride de fixation (51) sur laquelle est disposé le module (1) de sonde de pression, la bride de fixation étant élastique de telle sorte que la bride de fixation (51) peut coulisser au moins en partie par rapport à la paroi (53) lorsque le module de sonde de pression est inséré dans l'ouverture d'enfichage (69), le module (1) de sonde de pression pouvant être extrait en partie de l'ouverture d'enfichage (69).

10. Module de sonde de pression selon la revendication 1, **caractérisé en ce que** le module de sonde de pression présente en outre une bride de fixation (51) sur laquelle est disposé le module (1) de sonde de pression, la bride de fixation engageant un ressort (55) de telle sorte que la bride de fixation (51) peut coulisser par rapport à la paroi (53) lorsque le module de sonde de pression est inséré dans l'ouverture d'enfichage (69) si une force définie agit sur le ressort (55), de telle sorte que le module (1) de sonde de pression peut être extrait partiellement de l'ouverture d'enfichage (69).
